# DEMANDE DE BREVET EUROPEEN

(11) **EP 1 707 413 A1**
(43) Date de publication de la demande: **04.10.2006**
(21) Numéro de dépôt: 06290411.5
(22) Date de dépôt: 14.03.2006
(51) Int. Cl.: B60J 5/10, B60J 7/20, B62D 25/10, E06B 7/36

(54) **Véhicule équipé d'un ouvrant dont le système d'articulation possède un dispositif de protection**

(30) Priorité: 30.03.2005 FR 0503088
(71) Demandeur: Heuliez, 79140 Cerizay (FR)
(72) Inventeur: Queveau, Gérard, 79140 Le Pin (FR); Guillez, Jean-Marc, 79140 Cirieres (FR); Queveau, Paul, 79140 Montravers (FR)
(74) Mandataire: Breese Derambure Majerowicz

(57) **Abrégé**

L'invention concerne un véhicule automobile équipé d'un ouvrant dont les mouvements de fermeture et/ou d'ouverture sont motorisés au moyen d'un ou plusieurs actionneur(s) (26), l'ouvrant étant articulé à la carrosserie du véhicule au moyen d'au moins un système d'articulation (4).

Le véhicule comprend un dispositif de protection disposé à proximité de la périphérie de l'ouvrant, au voisinage de l'articulation de l'ouvrant avec la carrosserie.

Le dispositif de protection comprend une cloison (15) mobile entre une position déployée dans laquelle la cloison (15) protège l'espace entre l'ouvrant et la carrosserie du véhicule lorsque l'ouvrant est ouvert et une position repliée lorsque ledit ouvrant est fermé.

## Description

L'invention concerne un véhicule automobile comprenant un ouvrant dont les mouvements de fermeture et d'ouverture sont motorisés au moyen d'un ou plusieurs actionneur(s).

Dans l'art antérieur, il est connu des ouvrants dont les mouvements sont motorisés et notamment des capots de coffre. Cependant, ces ouvrants ne sont pas équipés d'un dispositif de protection des systèmes d'articulation. Or, ces systèmes d'articulation peuvent s'avérer très dangereux. En effet, un doigt ou un membre d'une personne peuvent se coincer dans un système d'articulation qui cisaille alors le doigt ou le membre.

L'invention vise à remédier à ces problèmes en proposant un véhicule équipé d'un ouvrant articulé à la carrosserie du véhicule au moyen de système d'articulation protégé par un dispositif de protection afin de réduire les risques d'accident.

L'invention vise également à protéger des systèmes d'articulation libérables dans le cas d'ouvrant possédant deux sens d'ouverture.

Enfin, l'invention a également pour but de protéger un système d'articulation déployable dont la complexité du mouvement rend difficile sa protection.

A cet effet, et selon un premier aspect, l'invention propose un véhicule automobile équipé d'un ouvrant dont les mouvements de fermeture et/ou d'ouverture sont motorisés au moyen d'un ou plusieurs actionneur(s), l'ouvrant étant articulé à la carrosserie du véhicule au moyen d'au moins un système d'articulation, ledit véhicule étant caractérisé en ce que au moins un système d'articulation comprend un dispositif de protection disposé à proximité de la périphérie de l'ouvrant, au voisinage de l'articulation de l'ouvrant avec la carrosserie, ledit dispositif de protection comprenant une cloison mobile entre une position déployée dans laquelle la cloison protège l'espace entre l'ouvrant et la carrosserie du véhicule lorsque l'ouvrant est ouvert et une position repliée sous l'ouvrant lorsque ledit ouvrant est fermé.

Ainsi, le système d'articulation est sécurisé car l'accès à celui-ci à partir de l'extérieur du véhicule est restreint.

D'autres objets et avantages de l'invention apparaîtront au cours de la description qui suit, faite en référence aux dessins annexés, dans lesquels :
- La figure 1 représente une vue schématique en coupe d'un coffre de véhicule équipé d'un capot pouvant s'ouvrir de l'arrière vers l'avant ou de l'avant vers l'arrière,
- La figure 2 représente un système d'articulation d'un capot de coffre, le dispositif de protection n'étant pas représenté.
- Les figures 3 et 4 représentent un système d'articulation d'un capot de coffre équipé d'un dispositif de protection selon un premier mode de réalisation, le dispositif de protection comprenant une cloison qui est représentée en position déployée (figure 3) et en position repliée (figure 4).
- La figure 5 représente une vue selon la direction V du dispositif de protection de la figure 3 lorsque la cloison est en position déployée.
- La figure 6 représente une vue selon la direction VI du dispositif de protection de la figure 4 lorsque la cloison est en position repliée.
- Les figures 7 et 8 représentent un système d'articulation d'un capot de coffre équipé d'un dispositif de protection selon un deuxième mode de réalisation de l'invention, le dispositif de protection comprenant une cloison qui est représentée en position déployée (figure 7) et en position repliée (figure 8).
- La figure 9 représente une vue selon la direction IX du dispositif de protection de la figure 7 lorsque la cloison est en position déployée.
- La figure 10 représente une vue selon la direction X du dispositif de protection de la figure 8 lorsque la cloison est en position repliée.
- Les figures 11 et 12 représentent un système d'articulation d'un capot de coffre équipé d'un dispositif de protection selon un troisième mode de réalisation de l'invention, le dispositif de protection comprenant une cloison qui est représentée en position déployée (figure 11) et en position repliée (figure 12).

Dans la description qui suit, il est décrit des modes de réalisation concernant un véhicule équipé d'un ouvrant tel qu'un capot 1 de coffre. Notons cependant que la présente invention ne se limite pas à un véhicule comprenant un capot 1 de coffre dont les mouvements sont motorisés mais peut également s'appliquer à tous types d'ouvrants et notamment des ouvrants dont l'axe de rotation est vertical tel qu'une portière latérale.

Le véhicule automobile comprend un coffre 2 équipé d'un capot 1.

Le capot 1 est articulé à la carrosserie 3 du véhicule au moyen d'au moins un système d'articulation 4.

Les mouvements d'ouverture et/ou fermeture du capot 1 sont motorisés au moyen d'un ou plusieurs actionneurs 26.

Selon un mode de réalisation, l'actionneur 26 est un vérin à double effet.

Dans un mode de réalisation non représenté de l'invention, le système d'articulation est solidaire d'une part du capot 1 et d'autre part de la carrosserie 3.

Dans un mode de réalisation détaillé de l'invention, le capot 1 est relié à la carrosserie 3 du véhicule par au moins un système d'articulation 4 situé au voisinage du bord avant du capot 1 et par au moins un système d'articulation situé au voisinage du bord arrière du capot 4 (non représenté). Les systèmes d'articulation 4 sont des systèmes à articulations libérables afin de permettre l'ouverture de l'ouvrant selon deux sens. Ainsi, le capot 1 peut s'ouvrir selon deux sens, de l'avant vers l'arrière ou de l'arrière vers l'avant.

À cet effet, chaque système d'articulation 4 est solidarisé à la carrosserie 3 au moyen d'une platine inférieure 5 montée libérable sur la carrosserie 3 du véhicule.

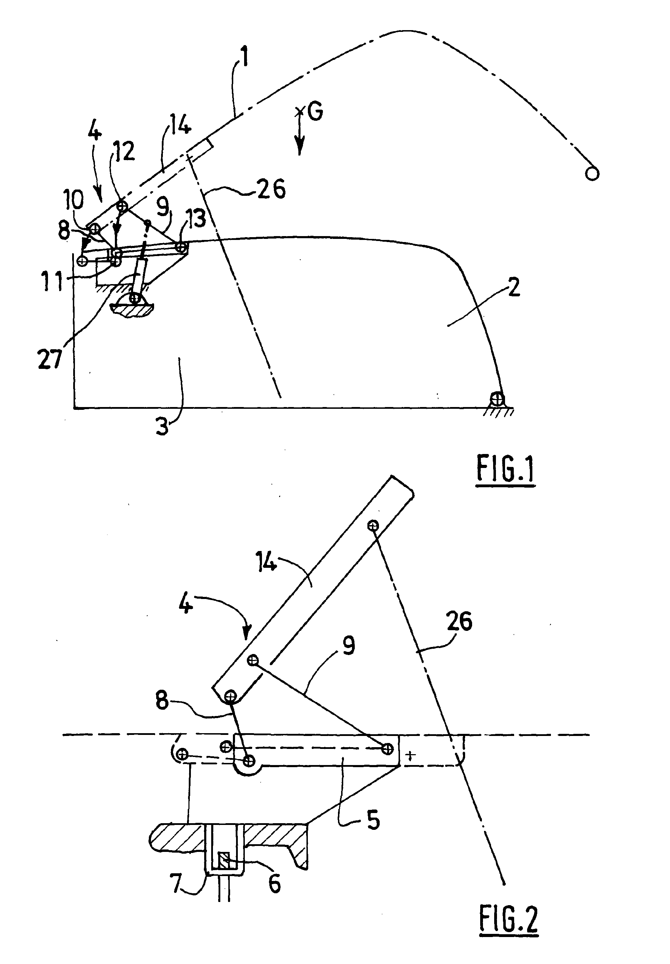

Selon le mode de réalisation représenté sur la figure 2, la platine inférieure 5 est solidarisée au véhicule par un crochet 6 retenant un anneau 7 solidaire de la platine inférieure 5.

Lors de l'ouverture du capot 1 de l'arrière vers l'avant, la platine inférieure 5 du système d'articulation avant est solidarisée au véhicule par le crochet 6 retenant l'anneau 7 solidaire de ladite platine inférieure 5. Ainsi, l'ouvrant s'articule à la carrosserie 3 au moyen du système d'articulation avant 4.

Au contraire, lors de l'ouverture du capot 1 de l'avant vers l'arrière, le crochet 6 libère l'anneau 7 et le système d'articulation avant 4 est emmené avec le capot 1 lors de son mouvement.

Dans le mode de réalisation représenté sur les figures, le système d'articulation 4 est un système à articulation déployable.

Un système à articulation déployable est un système dont l'axe de pivotement de l'ouvrant est mobile. Dans le mode de réalisation détaillée sur les figures, l'axe de pivotement décrit une courbe lors du déploiement du système d'articulation.

La cloison 15 est mobile vers sa position déployée lorsque le système d'articulation se déploie et mobile vers sa position repliée lors du repliement du système d'articulation.

À cet effet, le système d'articulation 4 de l'ouvrant 1 est composé de deux biellettes 8, 9. Une première biellette 8 est montée en rotation par rapport au capot 1 et à la platine inférieure 5 respectivement selon un premier 10 et deuxième axe 11 de rotation. Une seconde biellette 9 est montée en rotation par rapport au capot 1 et à la platine inférieure 5 respectivement selon un troisième 12 et quatrième axe 13 de rotation.

Les quatre axes 10, 11, 12, 13 de rotation précédemment décrits forment un quadrilatère déformable agencé pour permettre l'ouverture du capot 1.

Notons que d'autres types de systèmes d'articulation déployable peuvent également être utilisés et notamment des systèmes d'articulation composés de plus de deux biellettes.

Selon le mode de réalisation représenté, les biellettes 8, 9 sont montées en rotation par rapport au capot 1 au moyen d'une platine supérieure 14 solidaire du capot 1.

Le véhicule comprend au moins un dispositif de protection disposé à proximité de la périphérie du capot 1, au voisinage du système d'articulation 4.

Le dispositif de protection comprend une cloison 15 mobile entre une position déployée dans laquelle la cloison 15 protège l'espace entre le capot 1 et la carrosserie 3 lorsque le capot 1 est ouvert et une position repliée lorsque ledit capot 1 est fermé.

Ainsi, la cloison 15 empêche l'accès au système d'articulation 4 par l'extérieur du véhicule.

La cloison 15 est solidaire du capot 1.

Lorsque le système d'articulation 4 est solidarisé à la carrosserie 3 au moyen d'une platine inférieure 5 libérable, la cloison 15 est solidaire du capot 1 et la cloison 15 est maintenue dans sa position repliée lorsque ladite platine inférieure 5 est libérée.

Selon un mode de réalisation non représenté, des cloisons de protection sont disposées sur une partie ou la totalité de la périphérie du système d'articulation 4 afin de le sécuriser le plus intégralement possible.

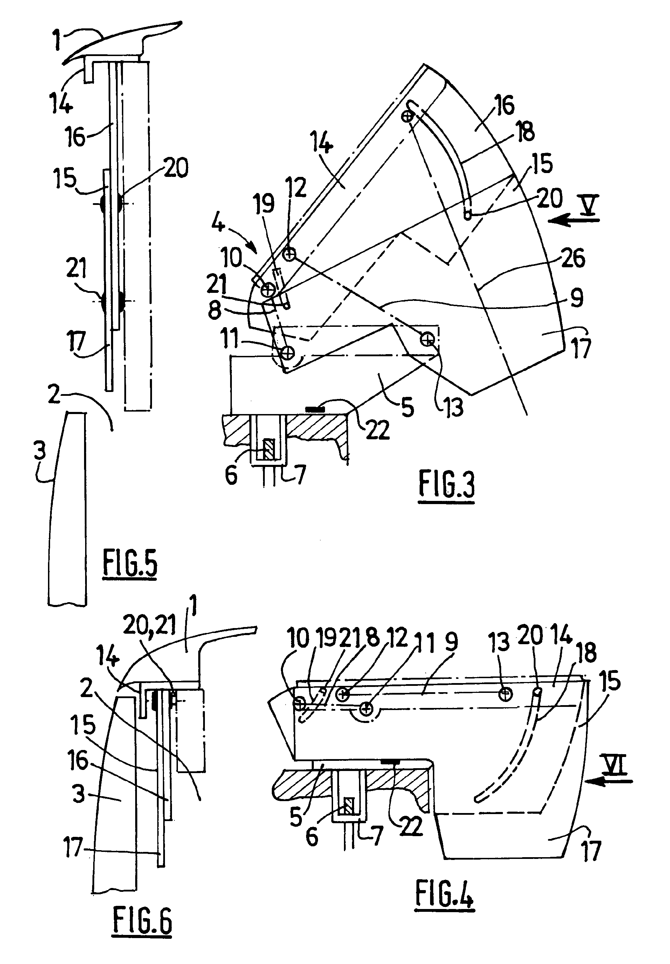

Les figures 3 à 6 représentent un premier mode de réalisation du dispositif de protection.

Le dispositif de protection possède une cloison 15 qui est composée de deux plaques 16, 17 rigides. Une première plaque 16 est solidaire du capot 1 et une seconde plaque est rappelée vers la platine inférieure 5.

Lorsque la cloison 15 est dans sa position pliée, les deux plaques 16, 17 sont disposées l'une contre l'autre. La première plaque 16 possède au moins une glissière 18, 19 dans laquelle est mobile un doigt solidaire 20, 21 de la seconde plaque 17.

Dans le mode de réalisation représenté sur les figures 3 à 6, la première plaque 16 porte des glissières curvilignes 18, 19 dans lesquelles sont guidés des doigts solidaires de la seconde plaque 17. Selon un mode de réalisation de l'invention, les doigts 20, 21 sont des rivets qui solidarisent la première plaque 16 avec la seconde plaque 17.

La seconde plaque 17 est rappelée vers la platine inférieure 5 au moyen d'un ressort de rappel (non représenté) disposé entre la seconde plaque 17 et la platine inférieure 5.

Ainsi, lors du mouvement de la cloison 15 vers sa position déployée, les plaques 16, 17 coulissent l'une sur l'autre de façon à masquer le système d'articulation 4 au fur et à mesure de leur déploiement.

Lors du mouvement de fermeture du capot 1, la seconde plaque 17 vient en contact sur une butée 22 solidaire de la platine inférieure 5 qui permet de rabattre la seconde plaque 17 vers le capot 1. Les deux plaques 16, 17 reviennent alors dans leur position repliée où elles sont disposées l'une contre l'autre.

Bien que le mode de réalisation détaillé ci-dessus décrit une cloison composée de deux plaques rigides 16, 17, la cloison peut également être composée d'une seule ou de plus de deux plaques.

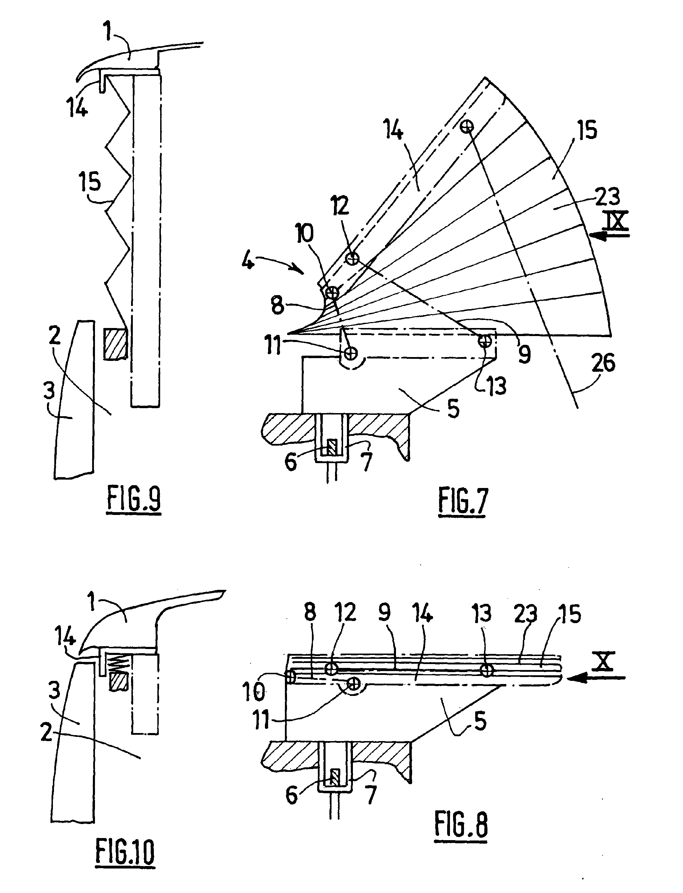

Selon un deuxième mode de réalisation représenté sur les figures 7 à 10, le dispositif de protection 4 est composé d'une cloison souple 23 du type soufflet dont une extrémité est solidarisée au capot 1 et l'autre extrémité est solidarisée à la platine inférieure 5.

Selon un mode de réalisation non représenté, la cloison 15 peut également être une cloison souple qui est disposée sur un enrouleur dans sa position pliée. L'enrouleur, solidaire d'une extrémité de la cloison 15, est solidarisé au capot 1 et l'autre extrémité de la cloison 15 est solidarisée à la platine inférieure 5 ou inversement.

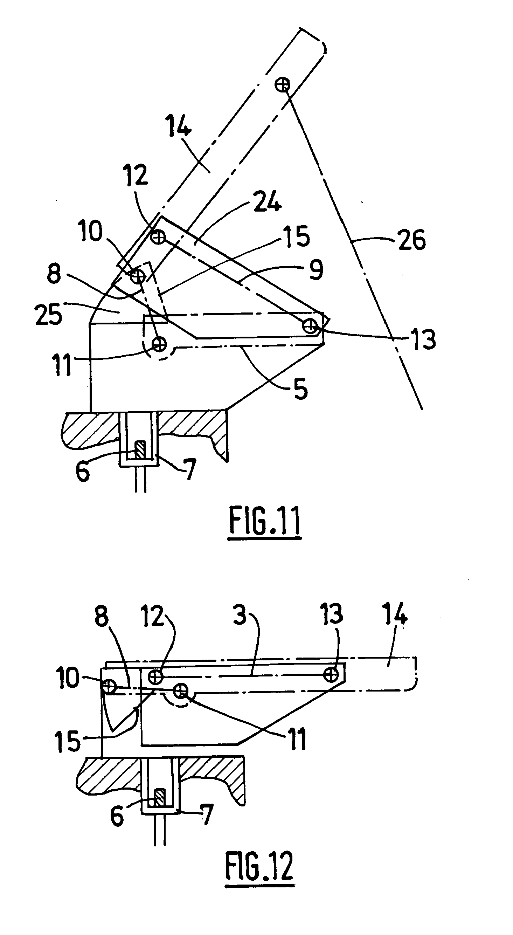

Selon un troisième mode de réalisation représenté sur les figures 11 et 12, la cloison 15 est composée de plaques rigides 24, 25 solidarisées aux biellettes 8, 9. Lors du déploiement du système d'articulation 4, les plaques 24, 25 se positionnent de façon à fermer complètement l'accès au système d'articulation 4. Cette solution permet d'obturer en même temps l'accès depuis l'extérieur et depuis l'intérieur du véhicule.

Le troisième mode de réalisation est particulièrement simple à mettre en oeuvre.

Notons que les trois modes de réalisation s'appliquent également à des systèmes d'articulation comprenant plus de deux biellettes 8, 9.

Dans un mode de réalisation de l'invention, l'actionneur 26 est également protégé par le dispositif de protection.

Dans les cas où le poids du capot est trop élevé, il est prévu d'ajouter un ou plusieurs équilibreurs 27 comme ceci est illustré à la figure 1.

Dans le mode de réalisation représenté, le dispositif d'articulation comporte un équilibreur 27. L'utilisation d'un tel équilibreur 27 permet de compenser une partie du poids du capot.

Dans un mode de réalisation particulier de l'invention, l'actionneur 26 est piloté par un dispositif de commande comprenant des moyens de détection des interférences avec les mouvements du capot 1. En cas de détection d'interférences, les moyens de détection agissent sur l'actionneur 26 de sorte à modifier la cinématique des mouvements du capot. La modification de la cinématique du mouvement consiste à arrêter ou renverser ledit mouvement.

## Revendications

1. Véhicule automobile équipé d'un ouvrant (1) dont les mouvements de fermeture et/ou d'ouverture sont motorisés au moyen d'un ou plusieurs actionneur(s) (26), l'ouvrant (1) étant articulé à la carrosserie (3) du véhicule au moyen d'au moins un système d'articulation (4), ledit véhicule étant **caractérisé en ce qu'**il comprend au moins un dispositif de protection disposé à proximité de la périphérie de l'ouvrant (1), au voisinage du système d'articulation (4), ledit dispositif de protection comprenant au moins une cloison (15) mobile entre une position déployée dans laquelle la cloison (15) protège l'espace entre l'ouvrant (1) et la carrosserie (3) lorsque l'ouvrant (1) est ouvert et une position repliée lorsque ledit ouvrant (1) est fermé.

2. Véhicule automobile selon la revendication 1, **caractérisé en ce que** la cloison (15) est solidaire de l'ouvrant (1).

3. Véhicule automobile selon la revendication 1 ou 2, **caractérisé en ce que** le(s) système(s) d'articulation (4) est un système d'articulation déployable, la cloison (15) étant mobile vers sa position déployée lorsque le système d'articulation se déploie et mobile vers sa position pliée lors du repliement du système d'articulation.

4. Véhicule automobile selon l'une quelconque des revendications 1 à 3, **caractérisé en ce qu'**il comprend au moins deux systèmes d'articulation, un système étant disposé à proximité d'un bord de l'ouvrant (1) et l'autre à proximité d'un bord opposé de l'ouvrant (1), chaque système d'articulation (4) est solidarisé à la carrosserie (3) au moyen d'une platine inférieure (5) montée libérable sur la carrosserie (3) du véhicule afin de permettre l'ouverture de l'ouvrant (1) suivant deux sens, la cloison (15) étant solidaire de l'ouvrant (1) et maintenue dans sa position repliée lorsque ladite platine inférieure (5) est libérée.

5. Véhicule automobile selon l'une des revendications 3 ou 4 lorsqu'elle dépend de la revendication 3, **caractérisé en ce que** le(s) système(s) d'articulation (4) comprend :
- une première biellette (8) montée en rotation par rapport à l'ouvrant (1) et à la platine inférieure (5) respectivement selon un premier (10) et deuxième axe (11) de rotation ;
- une seconde biellette (9) montée en rotation par rapport à l'ouvrant (1) et à la platine inférieure (5) respectivement selon un troisième (12) et quatrième axe (13) de rotation ;
les quatre axes de rotation (10, 11, 12, 13) formant un quadrilatère déformable agencé pour permettre l'ouverture de l'ouvrant (1).

6. Véhicule automobile selon la revendication 4 ou 5, **caractérisé en ce que** la platine inférieure (5) est solidarisée à la carrosserie (3) du véhicule par un crochet libérable (6) retenant un anneau (7) solidaire de la platine inférieure (5).

7. Véhicule automobile selon l'un quelconque des revendications 4 à 6, **caractérisé en ce que** la cloison (15) est composée de deux plaques rigides (16, 17), une première plaque (16) étant solidaire de l'ouvrant (1) et une seconde plaque (17) étant rappelée vers la platine inférieure (5), la première plaque (16) possédant au moins une glissière (18, 19) dans laquelle est mobile un doigt (20, 21) solidaire de la seconde plaque (17), les deux plaques (16, 17) étant disposées l'une contre l'autre lorsque la cloison (15) est dans sa position repliée et les plaques (16, 17) coulissant l'une sur l'autre lors du mouvement de la cloison (15) vers sa position déployée.

8. Véhicule automobile selon la revendication 7, **caractérisé en ce qu'**une butée (22) solidaire de la platine inférieure (5) permet de rabattre la seconde plaque (17) vers l'ouvrant (1) lors du mouvement de la cloison (15) vers sa position pliée.

9. Véhicule automobile selon la revendication 7 ou 8, **caractérisé en ce que** la seconde plaque (17) est rappelée vers la platine inférieure (5) au moyen d'un ressort de rappel disposé entre la seconde plaque (17) et la platine inférieure (5).

10. Véhicule automobile selon l'une quelconques des revendications 1 à 6, **caractérisé en ce que** la cloison (15) est une cloison souple (15), notamment du type soufflet, une extrémité de la cloison (15) étant solidaire de la platine inférieure (5).

11. Véhicule automobile selon l'une des revendications 5 ou 6, **caractérisé en ce que** la cloison (15) est composée de plaques rigides (16, 17) solidarisées aux biellettes (8, 9).

12. Véhicule automobile selon l'une quelconque des revendications 1 à 11, **caractérisé en ce que** le ou les actionneur(s) (26) est également protégé(s) par le dispositif de protection.

13. Véhicule automobile selon l'une quelconque des revendications 1 à 12, **caractérisé en ce que** des cloisons (15) de protection sont disposés sur une partie ou la totalité de la périphérie du système d'articulation (4) afin de le sécuriser le plus intégralement possible.

14. Véhicule selon l'une des revendications 1 à 13, **caractérisé en ce que** le ou les actionneur(s) (26) est piloté par un dispositif de commande qui comprend des moyens de détection d'interférences avec les mouvements de l'ouvrant (1), les moyens de détection agissant sur l'actionneur de sorte à modifier la cinématique desdits mouvements.

15. Véhicule automobile selon l'une des revendications 1 à 14, **caractérisé en ce que** l'ouvrant (1) est un capot de coffre.

16. Véhicule automobile selon l'une des revendications 1 à 15, **caractérisé en ce** le dispositif d'articulation (4) comportent un ou plusieurs équilibreurs (27) permettant de compenser le poids du capot.
